**Europäisches Patentamt**

**European Patent Office**

**Office européen des brevets**

(19)

(11) Veröffentlichungsnummer: **0 300 962 B1**

(12) # EUROPÄISCHE PATENTSCHRIFT

(45) Veröffentlichungstag der Patentschrift:
18.12.91 Patentblatt 91/51

(51) Int. Cl.$^5$: **B23K 35/28, // C22C21/06, C22C21/10**

(21) Anmeldenummer: **88810443.7**

(22) Anmeldetag: **27.06.88**

(54) Schweisszusatzwerkstoff zum Schmelzschweissen von hochfesten Aluminiumlegierungen.

(30) Priorität: **23.07.87 CH 2807/87**

(43) Veröffentlichungstag der Anmeldung:
**25.01.89 Patentblatt 89/04**

(45) Bekanntmachung des Hinweises auf die Patenterteilung:
**18.12.91 Patentblatt 91/51**

(84) Benannte Vertragsstaaten:
**CH DE FR GB IT LI NL**

(56) Entgegenhaltungen:
**EP-A- 0 206 519**

(56) Entgegenhaltungen:
**FR-A- 2 191 976**
**GB-A- 2 000 806**
**US-A- 3 332 773**
**BRITISH WELDING JOURNAL, Band 8, Nr. 7, Juli 1961, Seiten 360-365; P.T. HOULDCROFT: "Investigation of filler materials for welding Al-Zn-Mg alloys"**

(73) Patentinhaber: **ALUSUISSE-LONZA SERVICES AG**
**Feldeggstrasse 4**
**CH-8034 Zürich (CH)**

(72) Erfinder: **Schwellinger, Pius**
**vor Hägin 10**
**W-7708 Tengen-Büsslingen (DE)**

## Beschreibung

Die Erfindung betrifft einen Schweisszusatzwerkstoff zum Schmelzschweissen von hochfesten Aluminiumlegierungen, insbesondere Legierungen vom Typ AlZnMgCu.

An geschweisste Bauteile aus hochfesten Aluminiumlegierungen werden hohe Anforderungen bezüglich mechanischer Festigkeit gestellt. Neben einer qualitativ guten Schweissung ist die Zusammensetzung des Schweisszusatzwerkstoffes ein mitbestimmender Faktor. Einerseits neigen die bisher verwendeten Schweissdrahtmaterialien zu Warmrissen im Schweissgut, andererseits verursachen sie aber auch durch ihren verhältnismässig hohen Schmelzpunkt und der damit einhergehenden grossen Wärmeeinbringung Risse im unmittelbar an die Schweissnaht angrenzenden Grundmaterial. Beide Rissarten verschlechtern die Eigenschaften der Schweissverbindung dermassen, dass eine Verwendung bei belasteten Schweisskonstruktionen nicht in Frage kommt.

Aus der DE-PS 2736484 ist ein Schweisszusatzwerkstoff aus im wesentlichen

| | |
|---|---|
| 1-4% | Zink, |
| 2-5% | Magnesium |
| 0.2-0.5% | Kupfer |
| 0.3-0.5% | Mangan |

sowie Aluminium als Rest bekannt.

Mit der Verwendung dieses Werkstoffs zum Schmelzschweissen von hochfesten Aluminiumlegierungen kann jedoch die Bildung von Rissen in der Schweissnahtzone nicht verhindert werden.

Angesichts dieser Gegebenheiten hat sich der Erfinder das Ziel gesetzt, einen zum Schmelzschweissen hochfester Aluminiumlegierungen geeigneten Schweisszusatzwerkstoff bereitzustellen, mit welchem die Rissneigung im Bereich der Schweissnaht unterdrückt werden kann.

Erfindungsgemäss wird die Aufgabe gelöst durch einen Schweisszusatzwerkstoff folgender Zusammensetzung :

| | |
|---|---|
| 4.8-6.5% | Zink, |
| 4.0-6.0% | Magnesium, |
| 0.3-0.6% | Kupfer, |
| 0.3-0.5% | Mangan, |
| max. 0.1% | Titan, |
| max. 0.3% | Chrom, |
| max. 0.3% | Zirkon, |
| max. 0.1% | Silicium, |
| max. 0.3% | Eisen, |

sowie als Rest Aluminium handelsüblicher Reinheit.

Für die einzelnen Elemente haben sich die nachfolgenden Gehaltsbereiche als bevorzugt herausgestellt:

| | |
|---|---|
| 4.8-5.3% | Zink, |
| 4.3-5.3% | Magnesium, |
| 0.45-0.55% | Kupfer, |
| 0.35-0.45% | Mangan, |
| max. 0.15% | Chrom, |
| max. 0.15% | Zirkon, |
| max. 0.10% | Eisen. |

Eine als Schweisszusatzwerkstoff zum Schmelzschweissen von AlZnMgCu-Legierungen besonders geeignete Legierung weist die folgende Zusammensetzung auf :

| | |
|---|---|
| 4.9-5.3% | Zink, |
| 4.5-5.1% | Magnesium, |
| 0.45-0.55% | Kupfer, |
| 0.35-0.45% | Mangan, |
| max. 0.10% | Titan, |
| max. 0.15% | Chrom, |

max. 0.15%  Zirkon,
max. 0.10%  Silicium,
max. 0.10%  Eisen,

Rest Aluminium handelsüblicher Reinheit.

Alle Gehaltsangaben betreffend die Zusammensetzung des Schweisszusatzwerkstoffs beziehen sich auf Gewichts-Prozente.

Der erfindungsgemässe Schweisszusatzwerkstoff wird üblicherweise in Form von Draht verwendet und eignet sich für alle Arten von Schmelzschweissverfahren.

Die Vorteilhaftigkeit des erfindungsgemässen Schweisszusatzwerkstoffs wird nachstehend anhand eines Ausführungsbeispieles gezeigt.

Beispiel

Bleche von 8 mm Dicke aus einer Aluminiumlegierung mit 5.6% Zink, 2.6% Magnesium, 1.6% Kupfer, 0.16% Mangan, 0.18% Chrom, 0.01% Titan, 0.20% Eisen, sowie 0.06% Silicium wurden nach dem TIG-Plasma-Stichlochschweissverfahren mittels eines Schweissdrahtes der Zusammensetzung 5.2% Zink, 4.8% Magnesium, 0.55% Kupfer, 0.40% Mangan, 0.10% Titan, 0.10% Chrom, 0.04% Silicium, weniger als 0.10% Eisen, sowie Aluminium als Rest, verschweisst. Die verschweissten Bleche wurden aufgeteilt und die einzelnen Schweissproben unterschiedlichen Auslagerungsbedingungen unterworfen. Die anschliessende Bruchprüfung führte in keinem Fall zu einem Bruch an der Schweissnahtgrenze oder im Schweissgut, sondern ergab durchwegs eine Verschiebung der Bruchlage in den Bereich des Grundmetalls.

Metallographische Untersuchungen der Schweissverbindungen haben bestätigt, dass mit dem erfindungsgemässen Schweisszusatzwerkstoff die Bildung von Rissen im Bereich der Schweissnaht verhindert werden kann.

**Patentansprüche**

1. Schweisszusatzwerkstoff zum Schmelzschweissen von hochfesten Aluminiumlegierungen, insbesondere Legierungen vom Typ AlZnMgCu, dadurch gekennzeichnet, dass er

4.8-6.5%  Zink,
4.0-6.0%  Magnesium,
0.3-0.6%  Kupfer,
0.3-0.5%  Mangan,
max. 0.1%  Titan,
max. 0.3%  Chrom,
max. 0.3%  Zirkon,
max. 0.1%  Silicium,
max. 0.3%  Eisen,

sowie als Rest Aluminium handelsüblicher Reinheit enthält.

2. Schweisszusatzwerkstoff nach Anspruch 1, dadurch gekennzeichnet, dass er 4.8-5.3% Zink enthält.

3. Schweisszusatzwerkstoff nach Anspruch 1, dadurch gekennzeichnet, dass er 4.3-5.3% Magnesium enthält.

4. Schweisssusatzwerkstoff nach Anspruch 1, dadurch gekennzeichnet dass er 0.45-0.55% Kupfer enthält.

5. Schweisszusatzwerkstoff nach Anspruch 1, dadurch gekennzeichnet, dass er 0.35-0.45% Mangan enthält.

6. Schweisszusatzwerkstoff nach Anspruch 1, dadurch gekennzeichnet, dass er max. 0.15% Chrom enthält.

7. Schweisszusatzwerkstoff nach Anspruch 1, dadurch gekennzeichnet, dass er max. 0.15% Zirkon enthält.

8. Schweisszusatzwerkstoff nach Anspruch 1, dadurch gekennzeichnet, dass er max. 0.10% Eisen enthält.

9. Schweisszusatzwerkstoff nach Anspruch 1, dadurch gekennzeichnet, dass er

4.9-5.3%  Zink,
4.5-5.1%  Magnesium,

3

0.45-0.55%      Kupfer,
0.35-0.45%      Mangan,
max. 0.10%      Titan,
max. 0.15%      Chrom,
max. 0.15%      Zirkon,
max. 0.10%      Silicium,
max. 0.10%      Eisen,

sowie als Rest Aluminium handelsüblicher Reinheit enthält.

## Claims

1. Welding filler material for fusion welding high-strength aluminium alloys, in particular alloys of the type AlZnMgCu, characterised in that it contains

4.8-6.5%           of zinc,
4.0-6.0%           of magnesium,
0.3-0.6%           of copper,
0.3-0.5%           of manganese,
maximum 0.1%       of titanium,
maximum 0.3%       of chromium,
maximum 0.3%       of zirconium,
maximum 0.1%       of silicon,
maximum 0.3%       of iron

and the remainder is aluminium of commercially available purity.

2. Welding filler material according to claim 1, characterised in that it contains 4.8-5.3% of zinc.

3. Welding filler material according to claim 1, characterised in that it contains 4.3-5.3% of magnesium.

4. Welding filler material according to claim 1, characterised in that it contains 0.45-0.55% of copper.

5. Welding filler material according to claim 1, characterised in that it contains 0.35-0.45% of manganese.

6. Welding filler material according to claim 1, characterised in that it contains a maximum 0.15% of chromium.

7. Welding filler material according to claim 1, characterised in that it contains a maximum 0.15% of zirconium.

8. Welding filler material according to claim 1, characterised in that it contains a maximum 0.10% of iron.

9. Welding filler material according to claim 1, characterised in that it contains

4.9-5.3%           of zinc,
4.5-5.1%           of magnesium,
0.45-0.55%         of copper,
0.35-0.45%         of manganese,
maximum 0.10%      of titanium,
maximum 0.15%      of chromium,
maximum 0.15%      of zirconium,
maximum 0.10%      of silicon,
maximum 0.10%      of iron

and the remainder is aluminium of commercially available purity.

## Revendications

1. Métal d'apport pour le soudage par fusion d'alliages d'aluminium très résistants, notamment d'alliages du type AlZnMgCu, caractérisé en ce qu'il contient

4,8 à 6,5%         de zinc,
4,0 à 6,0%         de magnésium,

| 0,3 à 0,6% | de cuivre, |
|---|---|
| 0,3 à 0,5% | de manganèse, |
| max. 0,1% | de titane, |
| max. 0,3% | de chrome, |
| max. 0,3% | de zircon, |
| max. 0,1% | de silicium, |
| max. 0,3% | de fer, |

le reste étant de l'aluminium de pureté commerciale.

2. Métal d'apport selon la revendication 1, caractérisé en ce qu'il contient 4,8 à 5,3% de zinc.

3. Métal d'apport selon la revendication 1, caractérisé en ce qu'il contient 4,3 à 5,3% de magnésium.

4. Métal d'apport selon la revendication 1, caractérisé en ce qu'il contient 0,45 à 0,55% de cuivre.

5. Métal d'apport selon la revendication 1, caractérisé en ce qu'il contient 0,35 à 0,45% de manganèse.

6. Métal d'apport selon la revendication 1, caractérisé en ce qu'il contient au maximum 0,15% de chrome.

7. Métal d'apport selon la revendication 1, caractérisé en ce qu'il contient au maximum 0,15% de zircon.

8. Métal d'apport selon la revendication 1, caractérisé en ce qu'il contient au maximum 0,10% de fer.

9. Métal d'apport selon la revendication 1, caractérisé en ce qu'il contient

| 4,9 à 5,3% | de zinc, |
|---|---|
| 4,5 à 5,1% | de magnésium, |
| 0,45 à 0,55% | de cuivre, |
| 0,35 à 0,45% | de manganèse, |
| max. 0,10% | de titane, |
| max. 0,15% | de chrome, |
| max. 0,15% | de zircon, |
| max. 0,10% | de silicium, |
| max. 0,10% | de fer, |

le reste étant de l'aluminium de pureté commerciale.